# EUROPÄISCHE PATENTSCHRIFT

(11) **EP 2 905 573 B1**
(45) Veröffentlichungstag und Bekanntmachung des Hinweises auf die Patenterteilung: **28.12.2022**
(21) Anmeldenummer: 15152292.7
(22) Anmeldetag: 23.01.2015
(51) Int. Cl.: G01B 7/06, G01B 5/00

(54) **Verfahren zur elektrischen Ansteuerung eines Messstativs sowie Messstativ zur Aufnahme einer Messsonde**
Method for electrically controlling a gauge stand and gauge stand for holding a measurement gauge
Procédé de commande électrique d'un pied de mesure et pied de mesure destiné à recevoir une sonde de mesure

(30) Priorität: 07.02.2014 DE 102014101577
(43) Veröffentlichungstag der Anmeldung: 12.08.2015
(73) Patentinhaber: Helmut Fischer GmbH Institut für Elektronik und Messtechnik, 71069 Sindelfingen (DE)
(72) Erfinder: Fischer, Helmut, 6315 Oberägeri (CH)
(74) Vertreter: Mammel und Maser Patentanwälte PartG mbB

(56) Entgegenhaltungen:
- DE-A1- 19 649 515
- DE-A1-102005 034 515
- DE-A1-102010 011 633
- DE-B4- 19 649 515
- DE-B4-102010 011 633
- GB-A- 1 108 792
- US-A- 4 928 517
- US-A- 5 305 646

## Beschreibung

Die Erfindung betrifft ein Verfahren zur Ansteuerung eines Messstativs mit einer Verfahrbewegung von zumindest einer Messsonde, welche aus einer Ausgangsposition in eine Messposition übergeführt wird, wobei die Messsonde zur Messung der Dicke dünner Schichten auf einem Messgegenstand aufgesetzt wird. Des Weiteren betrifft die Erfindung ein Messstativ zur Durchführung des Verfahrens.

Aus der DE 10 2005 034 515 A1 ist ein Messstativ zur Aufnahme einer Messsonde zur Messung der Dicke dünner Schichten bekannt. Dieses Messstativ umfasst ein Gehäuse, in welchem ein Stößel auf und ab bewegbar geführt ist und an dessen zum Messobjekt weisenden Ende die Messsonde angeordnet ist. Eine Antriebseinheit mit einem elektrischen Antrieb treibt die Hubbewegung des Stößels an, wobei über eine Kurvenscheibe eine erste Bewegungsphase mit einem Eilgang und zumindest eine weitere Bewegungsphase des Stößels mit einem Eilgang und zumindest eine weitere Bewegungsphase des Stößels mit einem Kriechgang mechanisch angesteuert ist.

Aus der GB 1 108 792 A ist eine Höhenmessvorrichtung zur Ermittlung der Höhe eines Messgegenstandes bekannt. Diese Messvorrichtung umfasst einen Fühler zum Aufsetzen auf den Messgegenstand. Zur Vermeidung von Vibrationen beim Aufsetzen des Fühlers auf dem Messgegenstand ist vorgesehen, dass die Antriebseinrichtung mit dem Motor zum Heben und Senken des Fühlers gekoppelt bleibt. Zusätzlich ist zwischen dem Fühler und einem Ausgleichsgewicht an einem Hebelarm eine Feder vorgesehen, um die Vibrationen zu dämpfen.

Aus der US 5 305 646 A ist eine Messvorrichtung für kompressible Medien vorgesehen, dass ein Dämpfungszylinder eine Aufsetzbewegung eines Testkörpers auf das kompressible Medium dämpft, wobei die Dämpfungsvorrichtung derart eingestellt ist, dass der Testkörper eine messbare Deformation in dem Dichtungsmaterial, welches zu prüfen ist, erzeugt.

Aus der DE 10 2010 011 633 A1 ist ein Messstativ zur Aufnahme einer Messsonde bekannt, welches zur Messung der Dicke dünner Schichten auf einem Messgegenstand vorgesehen ist. Dieses Messstativ umfasst einen Messtisch sowie ein oberhalb des Messtisches angeordnetes Gehäuse, welches durch eine Säule zum Messtisch gehalten ist. In diesem Gehäuse ist ein Motor vorgesehen, der eine Antriebseinrichtung antreibt, welche mit einem Stößel verbunden ist. Die Antriebseinrichtung umfasst einen Schlitten, der entlang einer Führung auf und ab bewegbar geführt ist, wobei zwischen dem Schlitten und dem Motor ein Zahnriemen vorgesehen ist, um die Auf-und-Ab-Bewegung des Schlittens anzusteuern.

Der Stößel umfasst eine Aufnahme, an der eine Messsonde befestigbar ist. Zwischen dem Stößel und der Antriebseinrichtung ist ein Freilauf vorgesehen, der aktiviert wird, sobald ein Aufsetzen der Messsonde auf dem Messgegenstand erfolgt, wodurch die Verfahrbewegung der Antriebseinrichtung von der Hubbewegung des Stößels entkoppelt wird.

Dieses Messstativ ermöglicht nach dem Durchführen einer Lernroutine und dem dadurch erfolgenden Erfassen eines Abstandes zwischen einer Ausgangsposition des Stößels beziehungsweise der Messsonde und einer Messposition auf dem Messgegenstand ein exaktes Ansteuern einer Hubbewegung der Messsonde, so dass zunächst die Hubbewegung des Stößels im Eilgang angesteuert wird, der anschließend in einen Kriechgang übergeführt wird. Durch die vorherige Erfassung und Kenntnis des gesamten Hubweges bis zum Aufsetzen der Messsonde auf der Messoberfläche wird rechnerisch eine Geschwindigkeitsreduzierung für ein sanftes Aufsetzen der Messsonde ermittelt und erzielt. Ein solches Messstativ und ein Verfahren zur Ansteuerung einer Hubbewegung des Stößels zum Aufsetzen der Messsonde auf einen Messgegenstand haben sich bewährt. Aufgrund der stetig steigenden Anforderungen ist es erforderlich, ein solches Messstativ und ein Verfahren zu dessen Ansteuerung weiter zu entwickeln.

Der Erfindung liegt die Aufgabe zugrunde, ein Messstativ zur Aufnahme von zumindest einer Messsonde sowie zumindest ein Verfahren zur Ansteuerung des Messstativs mit einer Verfahrbewegung von zumindest einer Messsonde, zur Messung der Dicke dünner Schichten, vorzuschlagen, welches ein sanftes Aufsetzen der Messsonde auf der Messoberfläche des Messgegenstandes ermöglicht und darüber hinaus innerhalb sehr kurzer Zeit für eine neue Messaufgabe einsatzbereit sein kann.

Diese Aufgabe wird durch ein Verfahren gemäß dem Anspruch 1 gelöst. Bevorzugte Ausgestaltungen sind in den abhängigen Ansprüchen definiert. Durch die Reduzierung der Verfahrgeschwindigkeit unmittelbar vor dem Erreichen der Messposition oder in einem Verfahrbereich vor dem Erreichen der Messposition durch die mechanische Dämpfung kann eine voreinstellbare Geschwindigkeitsreduzierung aus einem Eilgang von der Ausgangsposition bis zum Beginn eines Dämpfungsbereichs oberhalb der Messposition erzielt werden, ohne dass zusätzliche Einstellmaßnahmen erforderlich sind. Innerhalb des Dämpfungsbereiches kann ein langsames Annähern und/oder sanftes Aufsetzen der Messsonde auf dem Messgegenstand ermöglicht sein. Es ist lediglich erforderlich, dass die Messsonde auf die Höhe der Messposition eingestellt wird, wobei diese bevorzugt in einer unteren Endposition mit der Antriebseinrichtung positioniert ist, um darauf folgend die Messungen durchzuführen. Dadurch kann eine Reduzierung der Zeit für die Einrichtung oder Umrüstung des Messstativs auf neue Messaufgaben erfolgen, wodurch die Produktivität gesteigert wird.

Des Weiteren ist bevorzugt vorgesehen, dass nach dem Aufsetzen der Messsonde in der Messposition auf dem Messgegenstand der Freilauf aktiviert wird und die Antriebseinrichtung im Kriechgang weiterfährt, bis diese einen unteren Endschalter betätigt. Der Dämpfungsbereich wird folglich durch die Position des Sensors am oder im Gehäuse zwischen der Ausgangsposition und der Messposition sowie dem unteren Endschalter bestimmt. Sobald der untere Endschalter betätigt ist, erhält die Steuerungseinrichtung das Signal, dass die Verfahrbewegung beendet ist und wartet zu, bis mittels der Messsonde ein Messsignal an die Steuerungseinrichtung weiter geleitet ist, wodurch für die Steuerungseinrichtung das Startsignal gegeben wird, um den Stößel anzuheben und die Messsonde aus der Messposition in die Ausgangsposition zurückzusetzen. Das Erreichen dieser Ausgangsposition wird durch einen oberen Endschalter in der Ausgangsposition wiederum erfasst und die Verfahrbewegung gestoppt.

Des Weiteren kann die Größe des Dämpfungsbereichs - also eine Hubbewegung des Stößels mit reduzierter Verfahrgeschwindigkeit - durch eine entlang des Stößels einstellbare Position des Schaltelements bestimmt werden. Dadurch kann der Dämpfungsbereich auch manuell auf eine vorbestimmte Hubstrecke des Stößels eingestellt werden, das heißt, dass auch eine Anpassung oder Verringerung des Dämpfungsbereiches und somit eine Verkürzung der Zeit zum Durchlaufen des Dämpfungsbereiches einstellbar ist. Alternativ kann auch eine vorbestimmte Zeitdauer, die insbesondere in Abhängigkeit einer vorwählbaren reduzierten Verfahrgeschwindigkeit stehen kann, für die reduzierte Verfahrgeschwindigkeit des Stößels als Maß für die Einstellung des Dämpfungsbereichs dienen.

Bevorzugt umfasst der Dämpfungsbereich zumindest eine Verfahrstrecke, welche oberhalb der Messposition der Messsonde beginnt und sich zumindest geringfügig über die Aktivierung des Freilaufes hinaus erstreckt.

Des Weiteren kann der Dämpfungsbereich zumindest eine Verfahrstrecke aufweisen, die größer als eine Eintauchbewegung eines Sensorelementes der Messsonde gegenüber einer Hülse der Messsonde ist, in welcher das Sensorelement eintauchbar geführt ist. Dadurch wird bei einer einfachen Einstellung des Hubweges des Stößels zur Messoberfläche des Gegenstandes sichergestellt, dass vor dem Aufsetzen des Sensorelementes der Messsonde beziehungsweise der Messsonde auf dem Messgegenstand eine Messsonde mit einer reduzierten Verfahrgeschwindigkeit verfahren wird, da sich die Messsonde bereits im Dämpfungsbereich befindet und die mechanische oder elektrische Dämpfung wirkt, um somit ein sanftes Aufsetzen auf der Oberfläche des Messgegenstandes zu erzielen.

Eine mechanische Dämpfung der Verfahrgeschwindigkeit wird bevorzugt durch eine Dämpfungseinrichtung mit einem Stellglied angesteuert, welche ein Dämpfungsglied aufweist, bei dem die Eintauchgeschwindigkeit mit zunehmendem Eintauchweg konstant bleibt oder abnimmt. Dadurch kann alternativ zu einer elektronischen Ansteuerung der Dämpfung eine mechanische Dämpfung gegeben sein.

Die der Erfindung zugrunde liegende Aufgabe wird des Weiteren durch ein Messstativ gelöst, bei dem eine Verfahrgeschwindigkeit der Antriebssteuerung vor Erreichen der Messposition durch eine mechanische Dämpfung einstellbar ist und verringert wird. Dadurch kann eine Verfahrbewegung der Antriebseinrichtung, welche auf die Hubbewegung beziehungsweise die Verfahrgeschwindigkeit des Stößels übertragen wird, abgebremst werden, bevor die Messsonde auf die Messoberfläche des Messgegenstandes zur Anlage kommt.

Beim Einsatz einer mechanischen Dämpfung zum Aufsetzen der Messsonde mit einer reduzierten Verfahrgeschwindigkeit auf die Oberfläche des Messgegenstandes ist bevorzugt eine Antriebseinrichtung vorgesehen, welche entlang einer vertikal ausgerichteten Führung einen verfahrbaren Schlitten aufweist, der von dem Motor auf und ab bewegbar angesteuert ist, wobei der Motor mit dem Schlitten antriebsverbunden ist. Dabei kann beispielsweise ein Riemenantrieb vorgesehen sein, um den Schlitten auf und ab zu bewegen. Da bei der Abwärtsbewegung der Antriebseinrichtung beziehungsweise dem Schlitten die Schwerkräfte des Schlittens und des Stößels unterstützend für eine hohe Verfahrgeschwindigkeit wirken, kann als Wirkverbindung zwischen dem Motor und dem Schlitten ein Zahnriemen genügen.

Des Weiteren ist bei einem Messstativ mit einer mechanischen Dämpfung bevorzugt in einer Ausgangsposition der Antriebseinrichtung ein oberer Endschalter und in einer unteren Endlage der Antriebsposition ein weiterer unterer Endschalter vorgesehen, der unterhalb der Messposition der Messsonde liegt. Dadurch kann nach der Aktivierung des Freilaufs, die zum Zeitpunkt des Aufsetzens der Messsonde auf der Messoberfläche der Messposition erfolgt, eine weitere Verfahrbewegung der Antriebseinrichtung überwacht und darauf folgend stillgesetzt werden, ohne dass jedoch dabei das Aufsetzen der Messsonde auf der Messoberfläche beeinträchtigt wird. Dadurch lässt sich auch das Ende des Dämpfungsbereiches bestimmen und festlegen.

Des Weiteren greift bevorzugt zur Ausbildung des Messstativs mit einer mechanischen Dämpfung an der Antriebseinrichtung eine mechanische Dämpfungseinrichtung an, welche in dem Gehäuse angeordnet ist und eine Verfahrbewegung der Antriebseinrichtung und somit der Hubbewegung des Stößels in Richtung auf den Messgegenstand entgegen wirkt. Dadurch kann wiederum die Bewegungsenergie der Antriebseinrichtung und des Stößels beim Überführen in die Messposition erheblich reduziert werden, wobei vorzugsweise eine sogenannte Knickkennlinie erreicht wird. Die Kennlinie verdeutlicht eine Änderung einer hohen Verfahrgeschwindigkeit, die vorzugsweise konstant ist, auf eine niedrige oder reduzierte Verfahrgeschwindigkeit, die ebenfalls konstant ist. Dabei entsteht beim Umschalten ein Knick, der die beiden Geraden miteinander verbindet, welche die jeweilige konstante Verfahrgeschwindigkeit darstellen.

Bevorzugt ist vorgesehen, dass bei der mechanischen Dämpfungseinrichtung eine Eintauchgeschwindigkeit des Stellgliedes in das Dämpfungsglied mit zunehmendem Eintauchweg konstant bleibt oder sogar abnimmt. Dadurch können sanfte Aufsetzbedingungen für die Messsonde auf der Oberfläche des Messgegenstandes erzielt werden.

Gemäß einer ersten Ausführungsform kann das mechanische Dämpfungsglied einen Hubkolbenzylinder aufweisen. Dadurch ist ein konstruktiv einfaches Bauteil gegeben, welches einen dauerhaften Einsatz ermöglicht.

Bevorzugt umfasst das Dämpfungsmedium in dem mechanischen Dämpfungsglied ein Fluid oder ein Gas, insbesondere Öl, Luft, Gel oder Wasser.

Alternativ kann die mechanische Dämpfungseinrichtung ein elektromagnetisches Dämpfungsglied oder eine Wirbelstromdämpfung aufweisen, durch welche die Eintauchbewegung des Stellgliedes bestimmt wird.

Des Weiteren ist bevorzugt eine Antriebseinrichtung vorgesehen, bei der entlang einer vertikalen Führung der Schlitten auf und ab bewegbar geführt ist, wobei ein Motor vorhanden ist, der ein Antriebsmoment aufweist, um der mechanischen Dämpfungseinrichtung entgegen zu wirken.

Die mechanische Dämpfungseinrichtung ist gegenüber der Antriebseinrichtung körperlich getrennt vorgesehen, insbesondere am Gehäuse befestigt. Dadurch wird zunächst die Antriebseinrichtung mit einer hohen Verfahrgeschwindigkeit angetrieben, wobei durch die mechanische Dämpfungseinrichtung, insbesondere dem Eintauchweg des Stellgliedes, auch der Dämpfungsbereich bestimmt wird. Sobald die Antriebseinrichtung, insbesondere mit dem Schlitten, zur Anlage auf das Stellglied der Dämpfungseinrichtung kommt, erfolgt die mechanische Dämpfung, das heißt eine Reduzierung der Verfahrgeschwindigkeit zum Aufsetzen der Messsonde in der Messposition auf dem Messgegenstand.

Das Stellglied der mechanischen Dämpfungseinrichtung wirkt vorteilhafterweise einer Verfahrbewegung der Antriebseinrichtung bzw. einem Antriebsmoment des Motors entgegen.

Des Weiteren ist bevorzugt zwischen dem Motor und dem Schlitten der Antriebseinrichtung ein Schwenkhebelmechanismus, ein Kurvengetriebe, eine Steilgewindespindel oder eine Kurvenscheibe vorgesehen. Dadurch können Antriebsmomente übertragen werden, welche unmittelbar der mechanischen Dämpfungseinrichtung entgegen gerichtet sind.

Bevorzugt ist des Weiteren als Motor ein Drehmagnetmotor vorgesehen. Dieser kann bezüglich seines Drehwinkels und dem aufzubringenden Antriebsmoment angesteuert werden. Darüber hinaus weisen solche Drehmagnetmotoren den Vorteil auf, dass diese hohe Beschleunigungen und hohe Kräfte übertragen können. Vorzugsweise ist durch eine darin angeordnete Rückstellfeder eine selbständige Rückstellung des Motors und vorzugsweise der Antriebseinrichtung in eine Ausgangsposition möglich.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine perspektivische Darstellung eines Messstativs,
Figur 2 eine schematische Seitenansicht auf ein Gehäuse des Messstativs gemäß Figur 1 mit einer Messsonde in einer Ausgangsposition,
Figur 3 eine perspektivische Ansicht auf eine Stirnseite des Gehäuses des Messstativs gemäß Figur 1,
Figur 4 eine schematische Seitenansicht auf das Gehäuse des Messstativs mit einer Messsonde in einer Messposition,
Figur 5 eine schematische Detailansicht einer Schaltvorrichtung des Messstativs gemäß Figur 1,
Figur 6 eine perspektivische Ansicht auf eine Rückwand des Gehäuses des Messstativs gemäß Figur 1 mit einer daran angeordneten Gewichtsentlastungseinrichtung,
Figur 7 eine schematische Seitenansicht einer alternativen Ausführungsform des Messstativs gemäß Figur 2,
Figur 8 eine schematische Stirnansicht auf das Messstativ gemäß Figur 7,
Figur 9 eine schematische Seitenansicht des Messstativs gemäß Figur 7 in einer ersten Verfahrposition,
Figur 10 eine schematische Seitenansicht des Messstativs gemäß Figur 7 in einer weiteren Verfahrposition und
Figur 11 eine schematische Seitenansicht des Messstativs gemäß Figur 7 in einer Messposition der Messsonde.

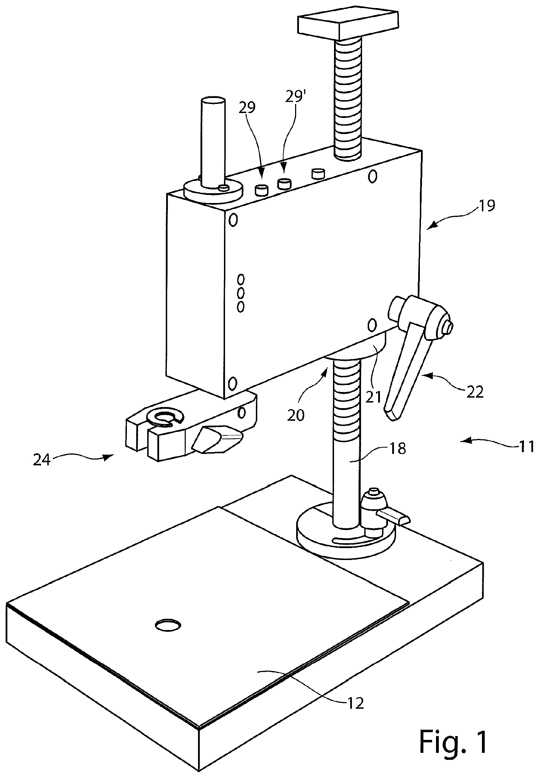

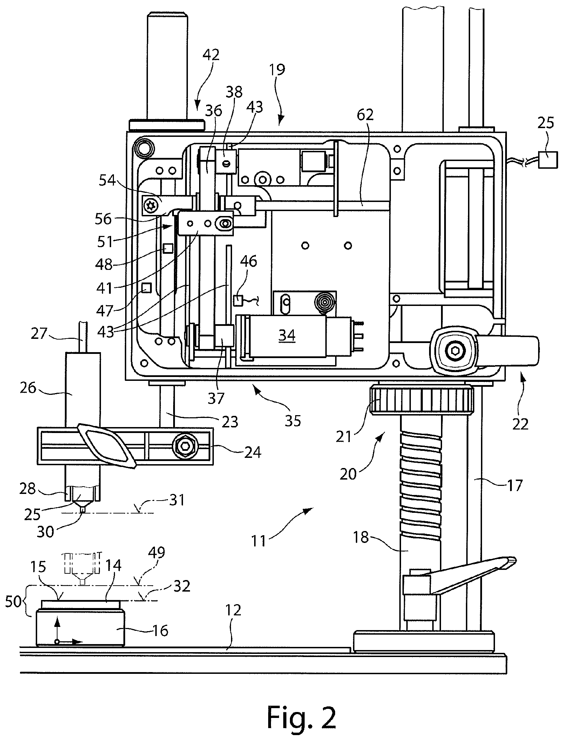

In Figur 1 ist perspektivisch ein Messstativ 11 dargestellt, in Figur 2 eine Seitenansicht. Dieses Messstativ 11 umfasst einen Messtisch 12, auf welchem einzelne Messobjekte oder Messgegenstände 14 unmittelbar aufgelegt oder von einer Aufnahme 16 gehalten werden können. Am Fuß des Messstativs 11 oder am Messtisch 12 ist eine senkrecht stehende Säule 17 vorgesehen, welche mit einer Gewindesäule 18 ein Gehäuse 19 höhenverstellbar aufnimmt. Durch die zwei zueinander benachbart angeordneten Säulen 17, 18 kann eine Parallelführung zur leichten Höhenverstellung gegeben sein. Eine Ausrichtung des Gehäuses 19 wird durch einen Einstellmechanismus 20 ermöglicht, der zumindest eine Stellschraube umfasst. Über eine Stellschraube 21 kann die Höhe eingestellt werden. Zusätzlich ist ein Spannmechanismus 22 vorgesehen, um das Gehäuse 19 in der Höhe zum Messtisch 12 zu fixieren.

Den Säulen 17, 18 gegenüberliegend ist am Gehäuse 19 ein Stößel 23 auf und ab bewegbar aufgenommen. Am unteren Ende des Stößels 23 ist eine Aufnahme 24 zur lösbaren Fixierung von Messsonden 26 oder Sensoren oder dergleichen vorgesehen. Die Aufnahme 24 kann alternativ auch zur Aufnahme von mehreren Messsonden 26 oder Sensoren ausgebildet sein. Die Messsonde 26 ist beispielsweise für die Messung der Dicke dünner Schichten vorgesehen. Diese Messsonde 26 weist beispielhaft ein Sensorelement 25 mit einer Aufsetzkalotte 30 auf, welche auf eine Messoberfläche 15 des Messgegenstandes 14 aufsetzbar ist. Das Sensorelement 25 ist in einer Hülse 28 der Messsonde 26 verschiebbar geführt und kann dieser gegenüber eintauchen, so dass das Sensorelement 25 vollständig innerhalb der Hülse 28 positioniert ist. Am gegenüberliegenden Ende der Messsonde 26 ist eine Anschlussleitung 27 vorgesehen, welche an einer nicht näher dargestellten separaten Messvorrichtung angeschlossen oder an einem nicht näher dargestellten Anschluss des Messstativs 11 an einer Steuereinrichtung 25 an einer Stirnseite des Gehäuses 19 anschließbar ist.

An einer Oberseite des Gehäuses 19 sind beispielsweise zwei Bedienelemente 29, 29', insbesondere Taster, vorgesehen. Beim Betätigen der Taste 29 erfolgt eine einmalige Verfahrbewegung aus der Ausgansposition 31 in die Messposition 32 und wieder zurück in die Ausgangsposition 31. Beim Betätigen der Taste 29' kann die zuvor beschriebene Einmalroutine mehrmals aufeinander folgend vorgesehen sein, wobei die Anzahl der Wiederholungen vorzugsweise frei programmierbar ist.

In Figur 2 ist die Messsonde 26 in einer Ausgangsposition 31 angeordnet. Durch den Stößel 23 kann die Messsonde 26 abgesenkt und in eine Messposition 32 übergeführt werden, die in diesem Ausführungsbeispiel einer Aufsetzposition auf der Messoberfläche 15 des Messgegenstandes 14 entspricht. Der zwischen der Ausgangsposition 31 und Messposition 32 liegende Abstand beziehungsweise Verfahrweg ist kleiner als ein Arbeitsbereich oder Hubweg des Stößels 23. Das Gehäuse 19 wird bevorzugt über die Stellschraube 21 derart zur Messoberfläche des Messgegenstandes 14 vorpositioniert, dass sich die Ausgangsposition 31 und die Messposition 32 innerhalb des Arbeitsbereiches des Stößels 23 befinden.

In dem Gehäuse 19 ist zur Ansteuerung einer Verfahrbewegung ein elektrischer Motor 34 vorgesehen, der eine Antriebseinrichtung 35 antreibt, welche mit dem Stößel 23 verbunden ist. Die Antriebseinrichtung 35 umfasst ein Antriebselement 36, welches insbesondere als Zahnriemen ausgebildet ist. Dieses Antriebselement 36 ist durch eine obere und untere Umlenkrolle 37, 38 aufgenommen. Diese Umlenkrollen 37, 38 sind bevorzugt als Zahnwalzen ausgebildet und an die Kontur der Zähne des Zahnriemens angepasst. Durch die Auswahl des Zahnriemens und der Zahnwalze ist eine schlupffreie Übertragung der Antriebsbewegung ermöglicht. Die untere Umlenkrolle 37 ist unmittelbar an der Antriebsachse des Motors 34 befestigt.

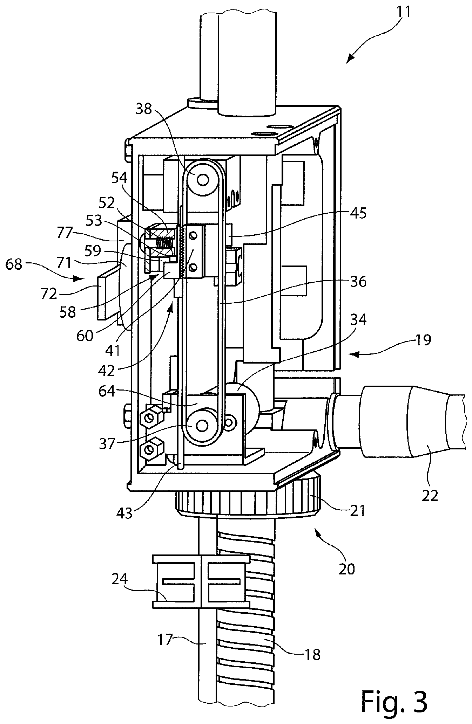

An dem Antriebselement 36 ist ein Koppelelement 41 vorgesehen, welches in Figur 3 näher dargestellt ist. Entlang einer Führung 42, welche vorzugsweise zwei parallel zueinander ausgerichtete Führungselemente 43, insbesondere Führungsstangen, umfasst, wird das Koppelelement 41 geführt. Das Koppelelement 41 ist durch eine Klemmbefestigung mit dem Antriebselement 36 verbunden. Das Koppelelement 41 weist in der Draufsicht gesehen eine U-förmige Kontur auf, so dass innerhalb den beiden Schenkeln der U-förmigen Kontur das Antriebselement 36 geführt ist und die jeweiligen Schenkel an den Führungselementen 43 angreifen. An dem Koppelelement 41 ist bevorzugt eine Schaltfahne 45 vorgesehen, die mit einem Sensorelement oder einer Gabellichtschranke zusammenwirkt, welche an einer nicht näher dargestellten Leiterplatte angeordnet ist, welche auch Teil der Steuer- und Regeleinrichtung ist. Dadurch kann eine obere Endlage der Antriebseinrichtung 35 erfasst werden. Alternativ kann auch ein oberer Endschalter 44 vorgesehen sein. Die Steuereinrichtung 25 kann in dem Gehäuse 19 angeordnet oder, wie dargestellt, auch außerhalb positioniert sein.

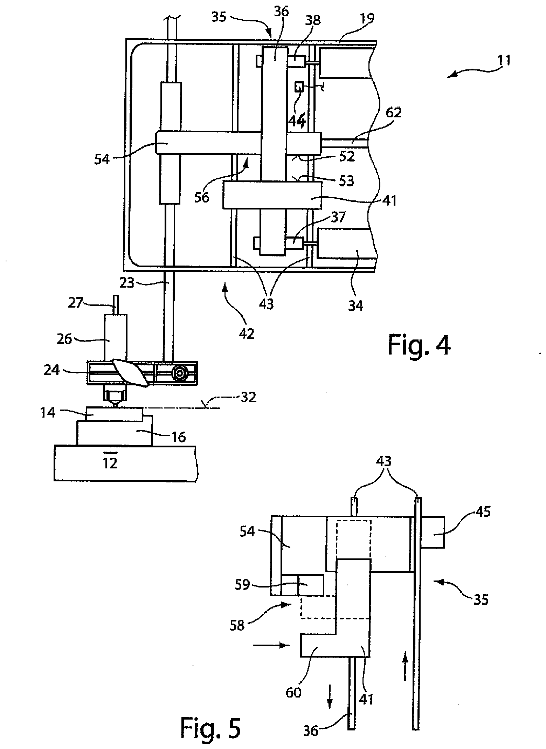

Der Stößel 23 und die Antriebseinrichtung 35 sind durch einen Freilauf 51 (Figur 3) miteinander gekoppelt. Dieser Freilauf 51 wird durch eine am Koppelelement 41 angeordnete Abstützfläche 52 einerseits und eine Anlagefläche 53 andererseits gebildet. Durch das Eigengewicht des Stößels 23 liegt die Anlagefläche 53 auf der Abstützfläche 52 auf. Diese Anlagefläche 53 ist bevorzugt an einem Schlitten 54 vorgesehen, der bevorzugt an der Führung 42 auf und ab bewegbar geführt ist. Der Schlitten 54 weist einen Aufnahmeabschnitt 56 auf, über den der Stößel 23 mit dem Schlitten 54 lösbar gekoppelt ist. Durch das Aufliegen des Stößels 23 auf der Antriebseinrichtung 35 wird während einer Verfahrbewegung der Messsonde 26, die durch den Motor 34 angetrieben wird, unmittelbar nach dem Aufsetzen der Messsonde 26 auf einer Messoberfläche des Messgegenstandes 14 ein Nachlaufen des Motors 34 und somit ein weiteres Absenken des Koppelelementes 41 ermöglicht, ohne dass die Antriebskraft auf den Stößel 23 und somit auf die Messsonde 26 übertragen wird. Diese entkoppelte Position des Freilaufs 51 ist in Figur 4 dargestellt. Durch einen unteren Endschalter 46 im Gehäuse 19 wird eine untere Endlage der Antriebseinrichtung 35 erfasst und der Motor 34 still gesetzt.

Der Freilauf 51 umfasst bevorzugt eine Schaltvorrichtung 58, welche aktiviert wird, sobald ein Abheben der Anlagefläche 53 von der Abstützfläche 52 erfolgt. Hierfür weist die Schaltvorrichtung 58 eine erste Komponente 59 auf, die an dem Schlitten 54 beziehungsweise Stößel 23 angeordnet ist und eine zweite Komponente 60, die mit dem Koppelelement 41 beziehungsweise der Antriebseinrichtung 35 in Verbindung steht. Bevorzugt ist die erste Komponente 59 als Gabellichtschranke und die zweite Komponente 60 als Schaltfinger oder Schaltfahne 45 ausgebildet. Sobald der Freilauf 51 aktiviert wird, wird die zweite Komponente 60 aus der ersten Komponente 59 herausgeführt und ein Schaltsignal an die Steuer- und Regeleinrichtung abgegeben. Diese Position ist strichliniert in Figur 5 dargestellt. An dem Schlitten 54 ist bevorzugt eine Leiterplatte angeordnet, welche das Schaltsignal der Gabellichtschranke, die an der Leiterplatte befestigt ist, verarbeitet und an die Steuer- und Regeleinrichtung weiterleitet. Die hierfür erforderlichen Steuerleitungen sind bevorzugt an einer Führungsstange 62 befestigt, welche in einer Führung nahe der Gewindesäule 18 auf und ab bewegbar ist. Die Führungsstange 62 ist an einem Ende fest mit dem Schlitten 54 verbunden. Gegenüberliegend weist die Führungsstange ein Roll- oder Gleitlager auf, welches in der Führung auf und ab bewegbar ist. Durch diese Führungsstange 62 wird eine mögliche auf den Stößel 23 wirkende radiale Antriebskraft eliminiert.

Eine Lagerstelle 64 zur Lagerung der Antriebsachse des Motors 34 kann gleichzeitig als Anschlag für eine Verfahrbewegung der Antriebseinrichtung 35 nach unten dienen.

Zwischen einer oberen und unteren Endlage der Antriebseinrichtung 35 ist ein Sensor 47 vorgesehen, der vorzugsweise an dem Gehäuse 19 befestigt ist. Passend zum Sensor 47 ist ein Schaltelement 48 vorgesehen, welches vorzugsweise an dem Stößel 23 befestigt ist. Alternativ kann dies auch an dem Schlitten 54 befestigt sein. Der Sensor 47 wird bei einer Hubbewegung des Stößels 23 aus der Ausgangsposition 31 in die Messposition 32 überfahren. Beispielsweise kann der Sensor 47 derart eingestellt sein, dass er bei der Herausgabe eines Schaltsignals in der Position 49 ist. Die Lage der Position 49 ist nur beispielhaft und kann näher oder entfernter zu Messoberfläche 15 des Messgegenstandes 14 oder zum unteren Endschalter im Gehäuse 19 positioniert sein. Bei diesem Sensor 47 und dem Schaltelement 48 kann es sich vorzugsweise um eine Lichtschranke mit einer Schaltfahne handeln. Alternativ kann die Schaltfahne 45, welche an dem Koppelelement 41 befestigt ist, auch einer weiteren Lichtschranke zugeordnet sein, um beispielsweise eine Position 49 zu erfassen.

Zwischen der Position 49 und zumindest der Messposition 32 oder einer darunter liegenden Position, die sich bis zur Einnahme der Antriebseinrichtung in einer unteren Endlage erstrecken kann, ist ein Dämpfungsbereich 50 gebildet, innerhalb welchem die Messsonde 26 bezüglich deren Verfahrgeschwindigkeit mechanisch oder elektrisch gedämpft ist. Oberhalb dieses Dämpfungsbereiches 50 - also von der Ausgangsposition 31 bis zur Position 49 - erfolgt eine hohe Verfahrgeschwindigkeit oder eine Verfahrgeschwindigkeit der Messsonde 26 im Eilgang, welche durch den Motor 34 angetrieben wird. Nach dem Überschreiten der Position 49 erfolgt die Dämpfung, das heißt, eine Reduzierung der Verfahrgeschwindigkeit der Messsonde 26, um eine langsame Zustellbewegung der Messsonde 26 auf die Messoberfläche 15 des Messgegenstandes 14 zu erzielen. Die Größe des Dämpfungsbereiches 50 kann durch die Höhenlage des Sensors 47 und des Schaltelementes 48 respektive der Schaltfahne 45 und eine dieser zugeordneten weiteren Lichtschranke eingestellt werden.

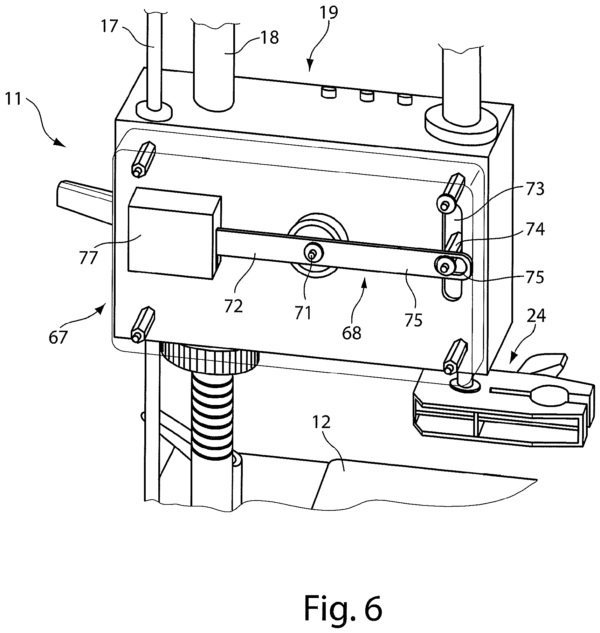

In Figur 6 ist an einer Rückseite 67 des Gehäuses 19 eine Gewichtsentlastungseinrichtung 68 vorgesehen. Diese Gewichtsentlastungseinrichtung 68 kann dann angebracht werden, wenn die Aufnahme 24 mehrere Messsonden 26 oder Sensoren oder größere und schwerere Messsonden 26 oder dergleichen aufnimmt. Diese Gewichtsentlastungseinrichtung 68 bewirkt, dass die zumindest eine Messsonde 26 mit einer nur geringen Eigengewichtskraft auf der Messoberfläche aufsitzt. Die Gewichtsentlastungseinrichtung 68 ist über eine Lagerachse 71 an der Rückwand 67 befestigt und nimmt schwenkbar einen Hebelarm 72 auf. An einem Ende des Hebelarmes 72 ist ein Befestigungsstift 74 vorgesehen, der an dem Stößel 23 angreift und eine Durchgangsbohrung 73 in der Rückseite 67 durchdringt. Der Befestigungsstift 74 ist in einer Langlochausnehmung 75 des Hebelarmes 72 befestigt, so dass während der Schwenkbewegung des Hebelarmes 72 eine Ausgleichsbewegung ermöglicht ist. Gegenüberliegend ist an dem Hebelarm 72 zumindest ein Massenkörper 77 vorgesehen. Dieser kann in Abhängigkeit der aufzunehmenden Last durch die Aufnahme 24 entlang dem Hebelarm 72 verfahrbar sein. Darüber hinaus kann der Massenkörper 77 austauschbar an dem Hebelarm 72 vorgesehen sein, so dass größere oder kleinere Massenkörper 77 daran angebracht werden können. Bevorzugt ist diese Gewichtsentlastungseinrichtung 68 durch einen Deckel abgedeckt und geschützt.

Ein solches Messstativ 11 wird bevorzugt für die Schichtdickenmessung eingesetzt. Die Schichtdickenmessung kann durch ein magnetinduktives Verfahren oder ein Wirbelstromverfahren durchgeführt werden. Der Einsatz des jeweiligen Verfahrens ist abhängig von dem Grundwerkstoff und den zu messenden Schichten. Das magnetinduktive Verfahren wird beispielsweise bei nichtmagnetischen Schichten auf ferromagnetischen Grundwerkstoffen eingesetzt. Bei elektrisch nicht leitenden Schichten auf Nichteisenmetallen wird das Wirbelstromverfahren durchgeführt.

Alternativ kann das Messstativ 11 auch für weitere Messaufgaben eingesetzt werden. Die Aufnahme 24 ist lösbar am Stößel 23 angeordnet, so dass entsprechend den Messelementen daran angepasste Aufnahmen 24 an dem Stößel 23 anordenbar sind.

Insbesondere bei der Messung der Dicke dünner Schichten auf einen Messgegenstand 14 als auch bei Serienmessungen auf einen Messgegenstand 14 werden solche Messstative 11 eingesetzt, da durch eine manuelle Messung mit einer Messsonde 26 ein Aufsetzen der Messsonde 26 auf der Messoberfläche mit unterschiedlichen Geschwindigkeiten oder Kräften und eine Beschädigung der Oberfläche des Messgegenstandes 14 als auch eine Verfälschung der Messwerte erfolgt.

Zur Einrichtung eines solchen Messstatives mit einer elektrischen Dämpfung auf eine neue Messaufgabe kann folgendermaßen vorgegangen werden:
Der Messgegenstand 14 wird mit oder ohne Aufnahme 16 auf dem Messtisch aufgesetzt. Anschließend wird die Antriebseinrichtung 35 in eine untere Endlage positioniert und die Messsonde 26 auf der Messoberfläche 15 des Messgegenstandes 14 aufgesetzt. Anschließend wird das Gehäuse 19 durch den Einstellmechanismus 20 geringfügig nach oben bewegt, so dass beispielsweise eine Messsonde 26, welche eine Hülse umfasst, in welcher das Sensorelement eintauchbar angeordnet ist, geringfügig von der Messoberfläche 15 abgehoben wird, wobei das Sensorelement selbst weiterhin auf der Messoberfläche 15 aufliegt. Im Anschluss daran kann ein erster Messzyklus durchgeführt werden. Dabei wird eine selbständige Routine durchlaufen, die einmalig sein kann oder mehrere Wiederholungen umfasst. Lediglich mittels einer der Tasten 29 ist der Start einzuleiten.

Zu Beginn der Routine ist die Antriebseinrichtung 35 in einer Ausgangsposition 31 angeordnet. Anschließend erfolgt eine Absenkbewegung der Antriebseinrichtung 35 mit einer hohen Verfahrgeschwindigkeit beziehungsweise im Eilgang, bis über den Sensor 47 beim Überfahren des Schaltelementes 48 ein Signal an die Steuerungseinrichtung 25 ausgegeben wird, wodurch eine elektrische Dämpfung für die Verfahrgeschwindigkeit eingeleitet wird. Es erfolgt eine Spannungsänderung beziehungsweise eine Verringerung der Antriebsdrehzahl, so dass die Messsonde 26 innerhalb des Dämpfungsbereiches 50 mit einer erheblich reduzierten Verfahrgeschwindigkeit weiter abgesenkt wird. Nach dem Aufsetzen der Messsonde 26 auf der Messoberfläche 15 wird der Freilauf 51 aktiviert, so dass der Motor 34 die Antriebseinrichtung 35 weiter betätigen kann, ohne dass eine Antriebskraft auf den Stößel 23 erfolgt. Der Dämpfungsbereich endet spätestens, sobald die Antriebseinrichtung 35 die untere Endlage eingenommen hat. Alternativ kann durch die Aktivierung des Freilaufs 51 ein Signal ausgegeben werden, wodurch der Dämpfungsbereich 50 beendet wird, das heißt, die Ansteuerung des Motors gestoppt und der Motor 34 still gesetzt wird. Nach Einnahme der unteren Endlage oder nach dem Stillsetzen des Motors 34 verbleibt die Messsonde 26 für eine vorbestimmbare Verweildauer auf dem Messgegenstand 14 zur Durchführung der Messung. Anschließend folgt durch die Steuerungseinrichtung 25 ein Rücksetzen der Messsonde 26 in die Ausgangsposition 31. Diese Rücksetzbewegung aus der Messposition 32 in die Ausgangsposition 31 kann auch durch die Steuerungseinrichtung 25 dann gestartet werden, sobald diese von der Messsonde 26 ein Steuersignal erhält, dass ein Messwert erfasst wurde.

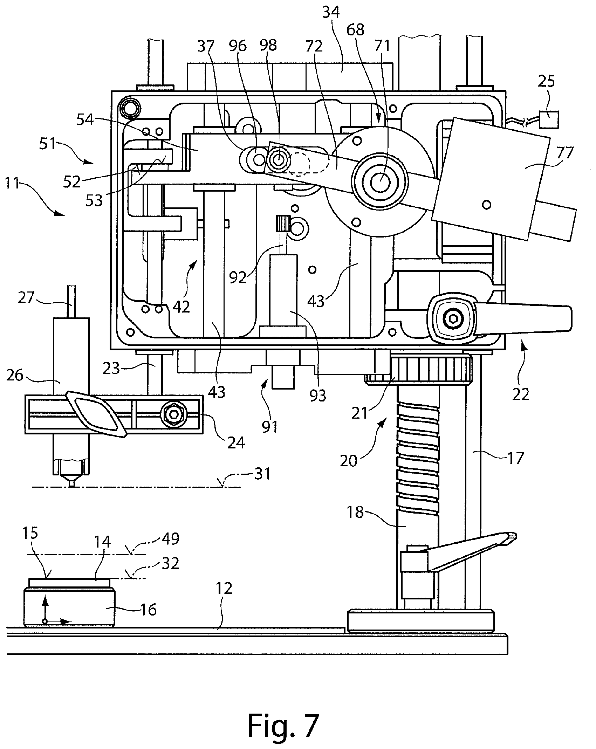

In Figur 7 ist eine alternative Ausführungsform des Messstativs 11 zur Ausführungsform gemäß Figur 2 dargestellt. Diese Ausführungsform weicht im Hinblick auf die konkrete Ausgestaltung der Antriebseinrichtung 35 als auch der Dämpfung der Verfahrbewegung des Stößels 23 durch eine mechanische Dämpfungseinrichtung 91 ab. Im Übrigen kann auf den Aufbau, die Funktionsweise und die Varianten des in den Figuren 1 bis 6 beschriebenen Messstativs 11 Bezug genommen werden.

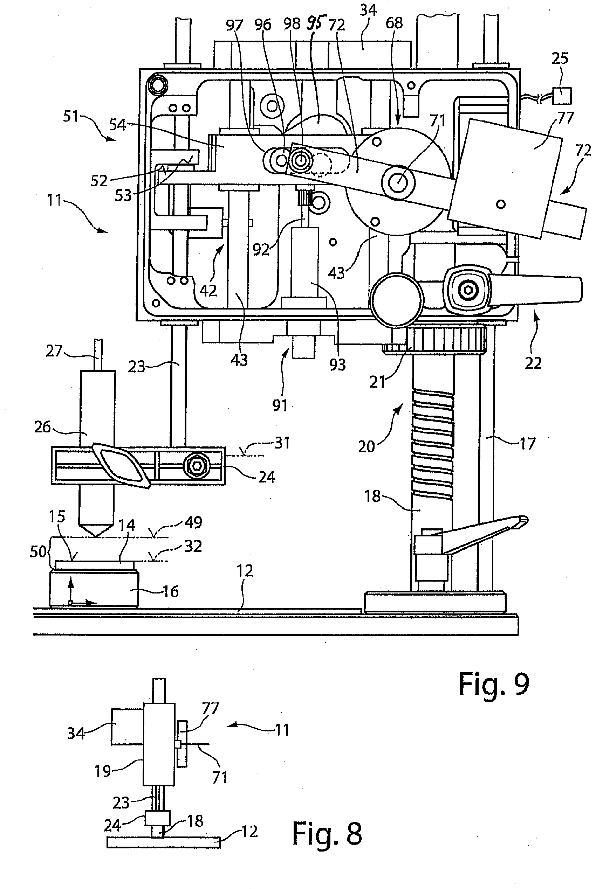

Nachfolgend werden die Abweichungen im Einzelnen erläutert:
Die Antriebseinrichtung 35 umfasst gemäß den Figuren 7 und 8 einen Motor 34, der seitlich am Gehäuse 19 an einer Außenwand fixiert ist. Über eine Antriebswelle des Motors 34 wird ein Schwenkhebel 95 angetrieben, der an dem Schlitten 54 der Antriebseinrichtung 35 angreift. Bevorzugt ist am freien Ende des Schwenkhebels eine Laufrolle 96 vorgesehen, welche mit vorzugsweise nur geringem Spiel in einer Ausnehmung 97, insbesondere Langlochausnehmung 97, geführt ist. Durch eine Schwenkbewegung des Schwenkhebels 95 wird die Laufrolle 96 aus einer Zwölf-Uhr-Position, beispielsweise entgegen dem Uhrzeigersinn, in eine Sechs-Uhr-Position übergeführt, wodurch eine Abwärtsbewegung des Schlittens 54 entlang der Führung 42 erfolgt. Ergänzend ist an einer dem Motor 34 gegenüber liegenden Außenseite des Gehäuses 19 ein Hebelarm 72 um eine Schwenkachse 71 rotierbar gelagert, wobei eine Hälfte des Hebelarms 72 ein Ausgleichsgewicht 77 aufnimmt, das entlang dem rechten Hebelarm verfahrbar und fixierbar vorgesehen ist, um eine entsprechende Hebelkraft einzustellen. Gegenüber liegend ist am Hebelarm 72 eine weitere Laufrolle 98 vorgesehen, welche ebenfalls in der Ausnehmung 97 des Schlittens 54 eingreift. Diese Gewichtsentlastungseinrichtung 68 entspricht in der Funktion der in Figur 6 beschriebenen.

In dem Gehäuse 19, vorteilhafterweise am Boden des Gehäuses 19, ist eine mechanische Dämpfungseinrichtung 91 angeordnet. Diese umfasst beispielsweise ein Stellglied 92, welches in einem Dämpfungsglied 93 eintauchbar geführt ist. Beispielsweise ist das Dämpfungsglied 93 als Hubkolbenzylinder ausgebildet. Das mechanische Dämpfungsglied 91 arbeitet bevorzugt mit einem Fluid, insbesondere Öl, Gas, Luft, Gel oder Wasser. Die Dämpfungsrate ist in einfacher Weise einstellbar.

Die Dämpfungseinrichtung 91 greift bevorzugt mit dem Stellglied 92 zwischen den beiden Führungen 42 mittig an dem Schlitten 54 an und wirkt einer Abwärtsbewegung des Schlittens 54 dämpfend entgegen.

Ein solches Messstativ 11 mit einer mechanischen Dämpfungseinrichtung 91 arbeitet folgendermaßen:

Auf einem Messtisch 12 wird ein Messgegenstand 14 mit oder ohne Aufnahme 16 positioniert. Die Antriebseinrichtung 35 ist in einer in Figur 7 dargestellten Ausgangsposition 31. Darauf folgend wird der Motor 34 über die Steuerungseinrichtung 25 bestromt. Bei diesem Motor 34 handelt es sich bevorzugt um einen Drehmagnetmotor, der ein hohes Anfangsdrehmoment erzeugen kann. Darauf folgend wird der Schwenkhebel 95 rotierend angetrieben, so dass dieser entgegen dem Uhrzeigersinn rotiert und den Schlitten 54 entlang der Führung 42 nach unten bewegt. Da die Abwärtsbewegung durch die Gewichtskraft des Stößels 23 und der Messsonde 26 unterstützt wird und das Gegengewicht 77 aufgrund des Hebelarms 72 nur geringfügig entgegen wirkt, erfolgt die Abwärtsbewegung der Antriebseinrichtung 35 mit einer hohen Verfahrgeschwindigkeit - also in einem Eilgang. Anschließend kommt der Schlitten 54 zur Anlage an dem Stellglied 92 der mechanischen Dämpfungseinrichtung 91. Dies ist in Figur 9 dargestellt. Die Messsonde 26 hat bis zu diesem Zeitpunkt mit einer hohen Geschwindigkeit einen großen Weg in Richtung auf die Messoberfläche 15 des Messgegenstandes 14 zurück gelegt. Nunmehr beginnt der Dämpfungsbereich 50, da der Schlitten 54 der Antriebseinrichtung 35 an dem Stellglied 92 der mechanischen Dämpfungseinrichtung 91 anliegt. Der Schwenkhebel 95 weist vorzugsweise einen Schwenkbereich von größer 90°, vorzugsweise größer 100°, auf, wobei die Ausrichtung der Schwenkhebel 95 derart ist, dass zu Beginn eine hohe Verfahrgeschwindigkeit auf dem Schlitten 54 erzeugt wird und diese gegen Ende der Verfahrbewegung abnimmt, wobei dann die Hubkraft zunimmt. Deshalb ist eine Startposition oder Ausgangsposition des Schwenkhebels zwischen einer Acht- bis Zehn-Uhr-Position beziehungsweise einer Zwei- bis Vier-Uhr-Position oder sogar eine Elf- bis Ein-Uhr-Position in einem Bereich zwischen einer Sieben- oder Sechs-Uhr-Position beziehungsweise Fünf- oder Sechs-Uhr-Position. Am Ende der Schwenkphase kann mit einer hohen Hebelkraft über den Schwenkhebel 95 der Dämpfungseinrichtung 91 entgegen gewirkt werden. Ausgehend von der in Figur 9 dargestellten Position wird die Hubbewegung des Stößels 23 und somit der Messsonde 12 in eine Kriechbewegung übergeführt, so dass eine langsame Zustellbewegung der Messsonde 26 auf die Messoberfläche des Messgegenstandes 14 gegeben ist. Eine Eintauchgeschwindigkeit des Stellgliedes 92 der mechanischen Dämpfungseinrichtung 91 wird durch das Dämpfungsglied 93 bestimmt.

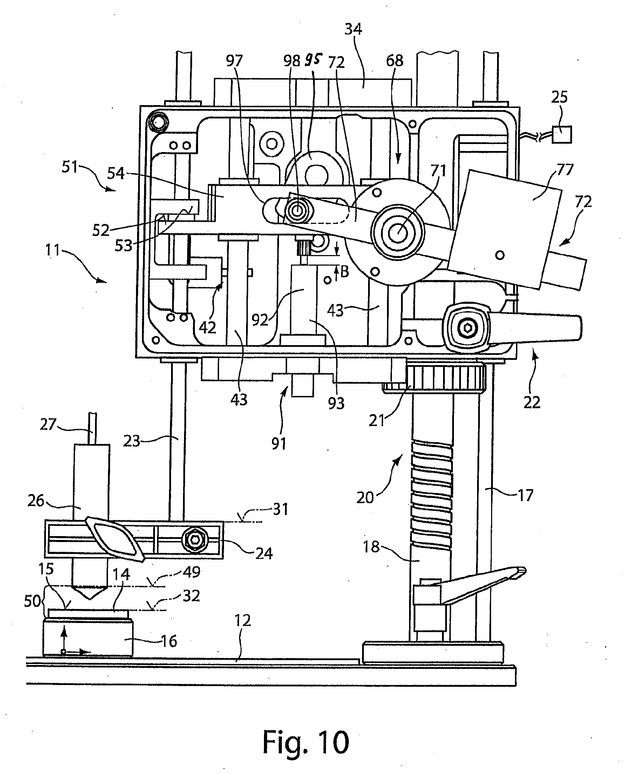

Eine Übergangsposition innerhalb des Dämpfungsbereiches 50 kurz vor dem Aufsetzen der Messsonde 12 auf dem Messgegenstand 16 ist in Figur 10 dargestellt.

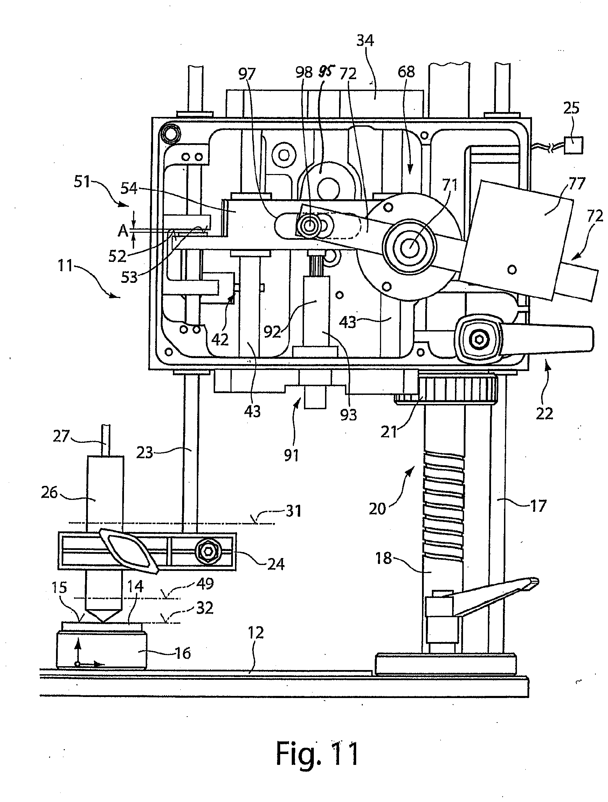

Nach dem Aufsetzen der Messsonde 12 auf der Messoberfläche 15 des Messgegenstandes 14 gemäß Figur 11 kann das Antriebsmoment des Motors 34 weiter wirken, so dass ein verbleibender Weg des Stellgliedes 92, der im Vergleich zwischen den Figuren 10 und 11 ersichtlich ist, durchlaufen wird. Gleichzeitig wird der Freilauf 51 aktiviert, wie dies in Figur 11 durch die Bezugsziffer A dargestellt ist, so dass keine Antriebskräfte auf die Messsonde 12 und somit auf die Messoberfläche 15 wirken.

Nach Erreichen der in Figur 11 dargestellten Endposition, die vorzugsweise durch einen nicht näher dargestellten unteren Endschalter erfasst werden kann, wird der Motor 34 über die Steuerungseinrichtung 25 nach einer vorbestimmten Zeit stromlos geschalten, um den Schwenkhebel 95 in dieser Position zu halten, die zumindest für die Durchführung einer Messung mit der Messsonde 26 erforderlich ist. Vorzugsweise bewirkt eine in dem Motor 34 enthaltene Rückstellfeder nach dem stromlos Schalten eine Rückstellung. Zusätzlich oder ausschließlich kann der Motor 34 auch zur Rückstellung angetrieben werden. Die Rückführung der Antriebseinrichtung 35 in die Ausgangsposition 31 wird dabei, insbesondere wenn kein Rückstellelement im Motor vorhanden ist, durch das Ausgleichsgewicht 77 unterstützt, um nach der Messung die Messsonde 12 von dem Messgegenstand 14 abzuheben und die Antriebseinrichtung 35 in die Ausgangsposition 31 gemäß Figur 1 zurückzuführen.

Alternativ zu dem in den Figuren 7 bis 11 dargestellten Motor 34 und der Antriebseinrichtung 35 können auch Alternativen vorgesehen sein, um den Schlitten 54 in eine Auf-und-Ab-Bewegung anzusteuern, wobei dessen Abwärtsbewegung der mechanischen Dämpfung mittels der Dämpfungseinrichtung 91 überlagert ist. Beispielsweise kann ein Motor über einen Antrieb, wie beispielsweise eine Kette, ein Zahnriemen oder dergleichen, ein Kurvengetriebe, wie beispielsweise eine Kurvenscheibe oder eine Steilgewindespindel, angetrieben werden, welche bezüglich des Kurven- beziehungsweise Gewindeverlaufs an die Größe beziehungsweise Länge einer Verfahrstrecke für die Eilgeschwindigkeit und des sich daran anschließenden Dämpfungsbereichs 50 angepasst ist.

## Patentansprüche

1. Verfahren zur elektrischen Ansteuerung eines Messstativs mit einer Verfahrbewegung von zumindest einer Messsonde (26) aus einer Ausgangsposition (31) in eine Messposition (32), zur Messung der Dicke dünner Schichten,
- bei dem ein Motor (34) von einer Steuerungseinrichtung (25) angesteuert wird, der über eine Antriebseinrichtung (35) einen Stößel (23) auf und ab bewegt, wobei an dem Stößel (23) eine Aufnahme (24) vorgesehen ist, an der die Messsonde (26) befestigbar ist,
- bei dem zwischen der Antriebseinrichtung (35) und dem Stößel (23) ein Freilauf (51) aktiviert wird, sobald ein Aufsetzen der Messsonde (26) oder der Aufnahme (24) auf einem Messgegenstand (14) in der Messposition (32) erfolgt und die Verfahrbewegung der Antriebseinrichtung (35) von der Hubbewegung des Stößels (23) entkoppelt wird, **dadurch gekennzeichnet,**
- **dass** die Antriebseinrichtung (35) einen Schlitten (54) aufweist, der entlang einer Führung (42) auf und ab bewegbar geführt wird, wobei die Antriebseinrichtung (35) mit dem Motor (34) antriebsverbunden und körperlich getrennt zur mechanischen Dämpfungseinrichtung (91) vorgesehen ist und
- **dass** eine Verfahrgeschwindigkeit der zumindest einen Messsonde (26) aus der Ausgangsposition (31) in die Messposition (32) vor dem Erreichen der Messposition (32) durch eine mechanische Dämpfung mit der Dämpfungseinrichtung (91) verringert wird.

2. Verfahren nach Anspruch 1, **dadurch gekennzeichnet, dass** ein Dämpfungsbereich (50) zumindest eine Verfahrstrecke aufweist, die größer als eine Eintauchbewegung eines Sensorelementes (25) der Messsonde (26) ist, welches gegenüber einer Hülse (28) eintauchbar geführt ist oder dass ein Dämpfungsbereich (50) zumindest eine Verfahrstrecke umfasst, welche oberhalb der Messposition (32) der Messsonde (26) beginnt und sich zumindest geringfügig über die Aktivierung des Freilaufs (51) hinaus erstreckt.

3. Verfahren nach einem der vorhergehenden Ansprüche, **dadurch gekennzeichnet, dass** die Antriebseinrichtung (35) eine vorbestimmbare Zeitdauer in einer unteren Position zu einem unteren Endschalter (46) positioniert wird, bis von der Messsonde (26) ein Messsignal an die Steuerungseinrichtung (25) weiter geleitet wird.

4. Verfahren nach Anspruch 1, **dadurch gekennzeichnet, dass** die Dämpfungseinrichtung (91) mit einem Stellglied (92) angesteuert wird, und die Dämpfungseinrichtung (91) ein Dämpfungsglied (93) aufweist, das die Eintauchgeschwindigkeit des Stellgliedes (92) mit zunehmenden Eintauchweg in das Dämpfungsglied (93) konstant hält oder verringert.

5. Messstativ zur Aufnahme einer Messsonde (26), zur Messung der Dicke dünner Schichten auf einem Messgegenstand (14), welches mit einem Messtisch (12) und einem oberhalb des Messtischs (12) angeordneten Gehäuse (19) ausgestattet ist, wobei in dem Gehäuse (19) ein Stößel (23) und eine Antriebseinrichtung (35) mit einem Motor (34) zur Ansteuerung einer Hubbewegung des Stößels (23) aus einer Ausgangsposition (31) in eine Messposition (32) vorgesehen sind, und die Antriebseinrichtung (35) von einer Steuerungseinrichtung (25) angesteuert ist, mit einer an dem Stößel (23) angeordneten Aufnahme (24), in der die Messsonde (26) befestigbar ist, mit einem zwischen der Antriebseinrichtung (35) und dem Stößel (23) vorgesehenen Freilauf (51), durch welchen beim Aufsetzen der Messsonde (26) oder der Aufnahme (24) in der Messposition (32) auf dem Messgegenstand (14) die Verfahrbewegung der Antriebseinrichtung (35) von der Hubbewegung des Stößels (23) entkoppelt wird, wobei die Antriebseinrichtung (35) einen Schlitten (54) aufweist, der entlang einer Führung (42) auf und ab bewegbar geführt ist, **dadurch gekennzeichnet, dass** die Antriebseinrichtung (35) mit dem Motor (34) antriebsverbunden und körperlich getrennt zu einer mechanischen Dämpfungseinrichtung (91) vorgesehen ist, wobei die Dämpfungseinrichtung dazu konfiguriert ist, dass eine Verfahrgeschwindigkeit der Antriebseinrichtung (35) vor dem Erreichen der Messposition (32) der Messsonde (26) durch eine mechanische Dämpfung mit der Dämpfungseinrichtung (91) verringert wird.

6. Messstativ nach Anspruch 5, **dadurch gekennzeichnet, dass** in einer Ausgangsposition (31) der Antriebseinrichtung (35) ein oberer Endschalter (44) und in einer unteren Endlage ein unterer Endschalter (46) vorgesehen ist, und dass die untere Endlage des unteren Endschalters (46) unterhalb der Messposition (32) der Messsonde (26) liegt.

7. Messstativ nach Anspruch 5, **dadurch gekennzeichnet, dass** die mechanische Dämpfung durch die mechanische Dämpfungseinrichtung (91) ansteuerbar ist, die am oder im Gehäuse (19) angeordnet ist und einer Verfahrbewegung der Antriebseinrichtung (35), insbesondere einer Hubbewegung des Stößels (23), in Richtung auf den Messgegenstand (14) entgegen wirkt.

8. Messstativ nach Anspruch 7, **dadurch gekennzeichnet, dass** die Dämpfungseinrichtung (91) ein Stellglied (92) umfasst, dessen Eintauchgeschwindigkeit in ein Dämpfungsglied (93) mit zunehmendem Eintauchweg konstant bleibt oder abnimmt und als Hubkolbenzylinder ausgebildet ist, und das mechanische Dämpfungsglied (93) als Dämpfungsmedium ein Fluid oder Gas aufweist oder dass die mechanische Dämpfungseinrichtung (91) ein elektromagnetisches Dämpfungsglied aufweist.

9. Messstativ nach Anspruch 8, **dadurch gekennzeichnet, dass** das elektromagnetische Dämpfungsglied der mechanischen Dämpfungseinrichtung (91) als Wirbelstromdämpfung ausgebildet ist.

10. Messstativ nach Anspruch 8, **dadurch gekennzeichnet, dass** das Stellglied (92) der Dämpfungseinrichtung (91) innerhalb eines Dämpfungsbereichs (50) einer Verfahrbewegung der Antriebseinrichtung (35) unmittelbar an dem Schlitten (54) angreift und einer durch den Motor (34) angetriebenen Verfahrbewegung entgegen wirkt.

11. Messstativ nach Anspruch 5, **dadurch gekennzeichnet, dass** zwischen dem Motor (34) und dem Schlitten (54) ein Schwenkhebelmechanismus, ein Kurvengetriebe, eine Steilgewindespindel oder eine Kurvenscheibe vorgesehen ist, durch welche die Antriebsbewegung des Motors (34) auf eine Verfahrbewegung des Schlittens (54) übertragbar ist.

12. Messstativ nach Anspruch 5, **dadurch gekennzeichnet, dass** der Motor (34) als Drehmagnet-Motor vorgesehen ist.

13. Messstativ nach Anspruch 12, **dadurch gekennzeichnet, dass** der Motor (34) eine Rückstellfeder umfasst.

## Claims

1. A method for electrically controlling a measurement stand including a movement of travel of at least one measuring probe (26) from a starting position (31) to a measuring position (32) for measuring the thickness of thin layers,
- in which a motor (34) is activated and controlled by a control device (25) and moves a push rod (23) up and down via a drive device (35), said push rod (23) having a retainer (24) provided thereon on which the measuring probe (26) may be fastened,
- in which between the drive device (35) and the push rod (23), a free-wheel mechanism (51) is activated once the measuring probe (26) or the retainer (24) has reached its measuring position (32), touching the surface of the object of measurement (14), and the travelling movement of the drive device (35) is thus decoupled from the stroke movement of the push rod (23), **characterised in that**
- the drive device (35) has a carriage (54) which is guided along a guide (42) in such a way as to be movable up and down, said drive device (35) being provided to be drivingly connected to the motor (34) and physically separated from the mechanical damping device (91), and
- a travelling speed of the at least one measuring probe (26) from the starting position (31) to the measuring position (32) is decreased by means of mechanical damping carried out by the damping device (91) before the measuring position (32) has been reached.

2. The method as claimed in claim 1, **characterised in that** a damping range (50) has at least a travelling distance which is greater than a plunging movement of a sensing element (25) of the measuring probe (26) which is guided so as to be able to plunge with respect to a sleeve (28), or **in that** a damping region (50) comprises at least one travelling distance which starts above the measuring position (32) of the measuring probe (26) and extends at least slightly beyond the point of activation of the free-wheel mechanism (51) .

3. The method as claimed in any of the preceding claims, **characterised in that** the drive device (35) is positioned in a lower position with respect to a lower end-of-travel switch (46) for a predeterminable duration until a measurement signal is transmitted by the measuring probe (26) to the control device (25).

4. The method as claimed in claim 1, **characterised in that** the damping device (91) is activated by an actuator (92) and the damping device (91) has a damping member (93) by means of which the plunging speed of the actuator (92) is maintained constant, or decreased, as it advances on its plunging path into the damping member (93).

5. A measurement stand for receiving a measuring probe (26) for measuring the thickness of thin layers on an object of measurement (14), which is equipped with a measuring table (12) and a housing (19) disposed above the measuring table (12), said housing (19) being provided to accommodate a push rod (23) and a drive device (35) including a motor (34) for activating and controlling a stroke movement of the push rod (23) from a starting position (31) to a measuring position (32), and the drive device (35) being activated and controlled by a control device (25), with a retainer (24) arranged on the push rod (23) and in which the measuring probe (26) may be fastened, with a free-wheel mechanism (51) provided between the drive device (35) and the push rod (23) by means of which the travelling movement of the drive device (35) is decoupled from the stroke movement of the push rod (23) when the measuring probe (26) or the retainer (24) is in the measuring position (32), touching the object of measurement (14), the drive device (35) having a carriage (54) which is guided in such a way that it is movable up and down along a guide (42), **characterised in that** the drive device (35) is provided to be drivingly connected to the motor (34) and physically separated from a mechanical damping device (91), said damping device being configured in such a manner that a travelling speed of the drive device (35) is decreased by means of mechanical damping carried out by the damping device (91) before the measuring position (32) of the measuring probe (26) has been reached.

6. The measurement stand as claimed in claim 5, **characterised in that** provision is made for an upper end-of-travel switch (44) to be provided in a starting position (31) of the drive device (35) and for a lower end-of-travel switch (46) to be provided in a lower end position and **in that** the lower end position of the lower end-of-travel switch (46) is located below the measuring position (32) of the measuring probe (26).

7. The measurement stand as claimed in claim 5, **characterised in that** mechanical damping may be activated and controlled by the mechanical damping device (91) which is arranged on or in the housing (19) and which counteracts a travelling movement of the drive device (35), in particular a stroke movement of the push rod (23), in the direction of the object of measurement (14).

8. The measurement stand as claimed in claim 7, **characterised in that** the damping device (91) comprises an actuator (92) whose plunging speed into a damping member (93) remains constant, or decreases, as it advances on its plunging path and which is realised as a piston cylinder, the mechanical damping member (93) using a fluid or gas as a damping medium, or **in that** the mechanical damping device (91) has an electromagnetic damping member.

9. The measurement stand as claimed in claim 8, **characterised in that** the electromagnetic damping member of the mechanical damping device (91) is realised as an eddy-current damping means.

10. The measurement stand as claimed in claim 8, **characterised in that** the actuator (92) of the damping device (91) is applied directly to the carriage (54) within a damping range (50) of a travelling movement of the drive device (35) and counteracts a travelling movement driven by the motor (34).

11. The measurement stand as claimed in claim 5, **characterised in that** between the motor (34) and the carriage (54), a pivot lever mechanism, a cam gear, a steep-threaded spindle, or a cam disc are provided by means of which the driving movement of the motor (34) may be transmitted to a travelling movement of the carriage (54).

12. The measurement stand as claimed in claim 5, **characterised in that** the motor (34) is provided as a rotary magnet motor.

13. The measurement stand as claimed in claim 12, **characterised in that** the motor (34) comprises a return spring.

## Revendications

1. Procédé pour la commande électrique d'un support de mesure avec un mouvement de déplacement d'au moins une sonde de mesure (26) depuis une position initiale (31) jusqu'à une position de mesure (32) en vue de mesurer l'épaisseur de couches minces,
- lors duquel un moteur (34) est activé par un dispositif de commande (25) qui, par l'intermédiaire d'un dispositif d'entraînement (35), fait monter et descendre une tige (23), sur la tige (23) étant prévue une réception (24) à laquelle peut être fixée la sonde de mesure (26),
- lors duquel une course en roue libre (51) est activée entre le dispositif d'entraînement (35) et la tige (23) dès que la sonde de mesure (26) ou la réception (24) se trouvant dans la position de mesure (32) se pose sur un objet de mesure (14), et le mouvement de déplacement du dispositif d'entraînement (35) est découplé du mouvement de course de la tige (23), **caractérisé en ce que**
- le dispositif d'entraînement (35) présente un chariot (54) qui est guidé le long d'un guide (42) de manière à pouvoir monter et descendre, le dispositif d'entraînement (35) étant prévu de manière telle qu'il est relié au moteur (34) afin d'être entraîné par celui-ci et est séparé physiquement du dispositif amortisseur mécanique (91) et
- une vitesse de déplacement de ladite au moins une sonde de mesure (26) depuis la position initiale (31) jusqu'à la position de mesure (32) est réduite par un amortissement mécanique obtenu grâce au dispositif amortisseur (91), et ce avant ladite position de mesure (32) ne soit atteinte.

2. Procédé selon la revendication 1, **caractérisé en ce qu'**une zone d'amortissement (50) présente au moins une distance de déplacement qui est plus grande qu'un mouvement de plongée d'un élément capteur (25) de la sonde de mesure (26) qui est guidé de manière à pouvoir plonger par rapport à une douille (28), ou **en ce qu'**une zone d'amortissement (50) comprend au moins une distance de déplacement qui commence au-dessus de la position de mesure (32) de la sonde de mesure (26) et qui s'étend au moins légèrement au-delà de l'activation de la course en roue libre (51) .

3. Procédé selon l'une quelconque des revendications précédentes, **caractérisé en ce que** le dispositif d'entraînement (35) est positionné pendant une durée de temps prédéterminable dans une position inférieure par rapport à un interrupteur final inférieur (46) jusqu'à ce qu' un signal de mesure soit transmis par la sonde de mesure (26) au dispositif de commande (25).

4. Procédé selon la revendication 1, **caractérisé en ce que** le dispositif amortisseur (91) est activé avec un organe de réglage (92), et que le dispositif amortisseur (91) présente un élément amortisseur (93) qui, plus la distance de plongée augmente, maintient constante ou réduit la vitesse de plongée de l'organe de réglage (92) dans l'élément amortisseur (93).

5. Support de mesure destiné à recevoir une sonde de mesure (26) en vue de mesurer l'épaisseur de couches minces sur un objet de mesure (14), lequel est équipé d'une table de mesure (12) et d'un carter (19) disposé au-dessus de la table de mesure (12), dans ledit carter (19) étant prévus une tige (23) et un dispositif d'entraînement (35) pourvu d'un moteur (34) destiné à activer un mouvement de course de la tige (23) depuis une position initiale (31) jusqu'à une position de mesure (32), et le dispositif d'entraînement (35) étant activé par un dispositif de commande (25), avec une réception (24) disposée sur la tige (23) et dans laquelle peut être fixée la sonde de mesure (26), avec une course en roue libre (51) qui est prévue entre le dispositif d'entraînement (35) et la tige (23) et grâce à laquelle le mouvement de déplacement du dispositif d'entraînement (35) est découplé du mouvement de course de la tige (23) lorsque la sonde de mesure (26) ou la réception (24) se trouvant dans la position de mesure (32) se pose sur l'objet de mesure (14), le dispositif d'entraînement (35) présentant un chariot (54) qui est guidé le long d'un guide (42) de manière à pouvoir monter et descendre, **caractérisé en ce que** le dispositif d'entraînement (35) est prévu de manière telle qu'il est relié au moteur (34) de manière à être entraîné par celui-ci et est séparé physiquement du dispositif amortisseur mécanique (91), le dispositif amortisseur étant configuré pour qu'une vitesse de déplacement du dispositif d'entraînement (35) soit réduite par un amortissement mécanique obtenu grâce au dispositif amortisseur (91), et ce avant que la position de mesure (32) de la sonde de mesure (26) ne soit atteinte.

6. Support de mesure selon la revendication 5, **caractérisé en ce que** dans une position initiale (31) du dispositif d'entraînement (35) est prévu un interrupteur final supérieur (44), et que dans une position finale inférieure est prévu un interrupteur final inférieur (46), et **en ce que** la position finale inférieure de l'interrupteur final inférieur (46) se situe au-dessous de la position de mesure (32) de la sonde de mesure (26).

7. Support de mesure selon la revendication 5, **caractérisé en ce que** l'amortissement mécanique peut être activé par le dispositif amortisseur mécanique (91) qui est disposé sur ou dans le carter (19) et qui agit à l'encontre d'un mouvement de déplacement du dispositif d'entraînement (35), en particulier d'un mouvement de course de la tige (23), en direction de l'objet de mesure (14).

8. Support de mesure selon la revendication 7, **caractérisé en ce que** le dispositif amortisseur (91) comprend un organe de réglage (92) dont la vitesse de plongée dans un élément amortisseur (93) reste constante ou diminue avec l'augmentation de la distance de plongée et qui est réalisé en tant que piston-cylindre, et **en ce que** l'élément amortisseur mécanique (93) présente comme fluide amortisseur un liquide ou un gaz, ou que le dispositif amortisseur mécanique (91) présente un élément amortisseur électromagnétique.

9. Support de mesure selon la revendication 8, **caractérisé en ce que** l'élément amortisseur électromagnétique du dispositif amortisseur mécanique (91) est réalisé en tant qu'amortissement par courant de Foucault.

10. Support de mesure selon la revendication 8, **caractérisé en ce que** l'organe de réglage (92) du dispositif amortisseur (91) appuie, à l'intérieur d'une zone d'amortissement (50) d'un mouvement de déplacement du dispositif d'entraînement (35), directement contre le chariot (54) et agit à l'encontre d'un mouvement de déplacement entraîné par le moteur (34).

11. Support de mesure selon la revendication 5, **caractérisé en ce qu'**entre le moteur (34) et le chariot (54) est prévu(e) un mécanisme à levier pivotant, un engrenage à came, une vis à pas rapide ou un disque à came permettant de transmettre le mouvement d'entraînement du moteur (34) à un mouvement de déplacement du chariot (54).

12. Support de mesure selon la revendication 5, **caractérisé en ce que** le moteur (34) utilisé est un moteur à aimant tournant.

13. Support de mesure selon la revendication 12, **caractérisé en ce que** le moteur (34) comprend un ressort de rappel.
